# EUROPEAN PATENT SPECIFICATION

(11) **EP 2 870 007 B1**
(45) Date of publication and mention of the grant of the patent: **21.11.2018**
(21) Application number: 13747497.9
(22) Date of filing: 04.07.2013
(51) Int. Cl.: B60C 19/00, B60C 9/20

(54) **TYRE FOR MOTOCYCLE WHEELS**
REIFEN FÜR MOTORRADRÄDER
PNEUMATIQUE POUR ROUES DE MOTO

(30) Priority: 05.07.2012 IT RM20120315; 05.10.2012 US 201261710124 P
(43) Date of publication of application: 13.05.2015
(73) Proprietor: Pirelli Tyre S.p.A., 20126 Milano (IT)
(72) Inventor: MARIANI, Mario, 20126 Milano (IT); GRASSI, Lisa, 20126 Milano (IT); GIAMBELLI, Roberta, 20126 Milano (IT); BRUSCHELLI, Luca, 20126 Milano (IT); MIRAGLIOTTA, Luca, 20126 Milano (IT)
(74) Representative: Porta, Checcacci & Associati S.p.A
(86) International application number: PCT/IB2013/001441
(87) International publication number: WO 2014/006485

(56) References cited:
- JP-A- 2004 168 118
- JP-A- 2008 100 589
- JP-A- 2009 057 008

## Description

### FILED OF THE INVENTION

The present invention relates to tyres for motorcycle wheels.

In particular, the present invention relates to high performance tyres for motorcycle wheels, in other words tyres which are able to reach maximum speeds of at least about 210 km/h or to bear maximum loads of at least about 210 kg or to withstand a combination of both conditions.

### PRIOR ART

A high curvature tyre for motorcycles is known for example from US6609551. Such tyre has a belt structure including circumferentially arranged textile reinforcing cords made of an aromatic polyamide (aramid) fibre.

In EP1710097 a tyre for motorcycles is described having a cross-belt structure comprising aramid reinforcing textile cords.

In US20080271830 a tyre for motorcycles is described having a cross-belt structure comprising aramid cords.

In WO2011012944, to the same Applicant, a tyre for motorcycles is described having a radial carcass comprising cords made of lyocell fibre.

In JP2008 100589 is disclosed a tyre comprising a lyocell cord.

Further prior art documents disclosing tyres for motorcycles similar to those above, are JP2004 168118 and JP2009 057008.

### SUMMARY OF THE INVENTION

In tyres for motorcycles, the materials employed for the reinforcing cords of the belt structures are typically textile or metallic materials.

In tyres for high speed use, such as tyres used in the racing or supersport segments or tyres for road enduro, the reference textile materials for cross-belts and/or circumferential (at 0 degrees) belts consist of aromatic polyamide of traction) of the reinforcing material shall be higher as the application becomes more demanding.

The Applicant has performed traction tests on flat yarns according to the testing methods defined by BISFA (Bureau International pour la Standardisation des Fibres Artificielles).

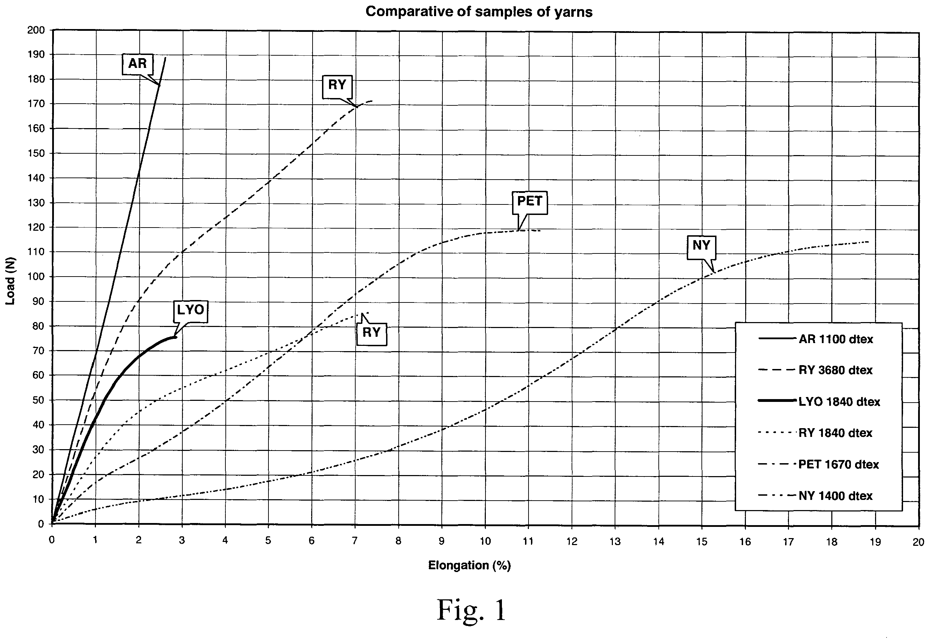

In figure 1 a comparison is shown between the load/elongation curves of yarns made of aramid fibres (AR), rayon (RY), lyocell (LYO), polyester (PET), and nylon (NY), obtained according to the following tests:
For aramid fibres (AR):
   BISFA - Testing methods for para-aramid filament yarns - 2002 Edition, Determination of tensile properties - Chapter 7 - Test procedure - Paragraph 7.5 - With initial pre-tensioning procedure.
For rayon:
   BISFA - Testing methods for viscose, cupro, acetate, triacetate and lyocell filament yarns - 2007 Edition, Determination of tensile properties - Chapter 7 - Tensile test conditions: oven dry test - Table 7.1 - Test procedure - Paragraph 7.5 - With oven dry test on relieved samples - Subparagraph 7.5.2.4.
For polyester (PET):
   BISFA - Testing methods for polyester filament yarns - 2004 Edition, Determination of tensile properties - Chapter 7 - Procedure A Preparation of laboratory samples: Relaxed samples preparation - Paragraph 7.4.1.1 => Preparation of samples on collapsible reel
   Preparation of laboratory samples and performance of test: Manual test - Paragraph 7.5.2.1 => c)
   Procedure start => e) pre-tensioning at procedure start
   Employed clamps: Instron clamps model 2714-004 (for 1 kN).
For Nylon (NY):
   BISFA - Testing methods for polyamide filament yarns - 2004 Edition, Determination of tensile properties - Chapter 7 - Procedure A Preparation of laboratory samples: Relaxed samples preparation - Paragraph 7.4.1.1 => Preparation of samples on collapsible reel
   Preparation of laboratory samples and performance of test: Manual test - Paragraph 7.5.2.1 => c)
   Procedure start => e) pre-tensioning at procedure start
   Employed clamps: Instron clamps model 2714-004 (for 1 kN).

As highlighted in figure 1, the aramid fibre yarn has a high modulus, whereas the rayon, lyocell, polyester and nylon yarns lie in a region of relatively low modules of the load/elongation diagram, typical of the material used for the carcass reinforcing elements.

Aramids are presently materials difficult to procure, particularly expensive and difficult to control during processing. Due to the low affinity of aramid fibres with elastomers, the adhesion of cords made of such fibres to the elastomeric portion is critical, making it necessary for the cords to undergo in advance complex tackifying treatments.

The Applicant has found that high performance in demanding driving conditions, such as those that may occur during manoeuvres for changing direction and/or speed with a particularly loaded and heavy motorcycle, and/or at high speeds, can be achieved by providing the motorcycle with tyres comprising a cross-belt structure having at least one belt layer comprising a plurality of reinforcing cords comprising lyocell fibres.

This outcome was unexpected, since the lyocell yarn has an elastic response noticeably lower than that of the aramid and substantially similar to that of other textile yarns or ends, besides an ultimate elongation similar to that of the aramid and much lower than that of polyesters, rayon or nylon in the commonly used linear densities.

Such features of the lyocell led to think that the belting effect obtainable with reinforcing elements made of said yarns would have been inadequate.

The Applicant has unexpectedly found that even starting from a yarn as lyocell, by acting on linear density, number of yarns and twists, it is possible to increase the cord stiffness up to achieving an elastic response which allows manufacturing a semifinished product (belt layer) having a belting effect on the tyre suitable for obtaining proper distribution of longitudinal and transverse loads and stresses also during manoeuvres of change of direction under demanding speed and/or load conditions.

In a first aspect thereof, the present invention relates to a method for imparting a belting effect to a motorcycle tyre, said method including:
- predetermining a value of linear density and/or twists and/or number of yarns or ends of lyocell cords so as to obtain an elastic response of said cords greater than a predetermined value measured at a predetermined strain;
- assembling a cross-belt structure comprising at least one belt layer including said cords;
- making a tyre for a motorcycle wheel comprising said belt structure.

In a second aspect thereof, the present invention relates to a tyre for motorcycles comprising:
a carcass structure;
a belt structure applied in a radially outer position with respect to the carcass structure;
a tread band applied in a radially outer position with respect to the belt structure;
said tyre having a transverse curvature ratio (f/C) of at least about 0.20, wherein said belt structure comprises at least one belt layer comprising a plurality of reinforcing cords arranged substantially parallel to one another and inclined with respect to the equatorial plane of the tyre, said reinforcing cords being made of lyocell yarns or ends, said cords having, in a load/elongation diagram, a response of at least about 120 N at an elongation of about 2%.

The present invention, in one or more preferred aspects of the above-mentioned aspects, may comprise one or more of the features hereinafter presented.

According to a preferred embodiment, said cords have, in load/elongation diagram, a response not greater than about 200 N at an elongation of about 2%.

The elastic response is evaluated from a load/elongation diagram obtained according to BISFA tests - Testing methods for viscose, cupro, acetate, triacetate and lyocell filament yarns - 2007 Edition, Determination of tensile properties - Chapter 7 - Tensile test conditions: oven dry test - Table 7.1 - Test procedure - Paragraph 7.5 - With oven dry test on relaxed samples - Subparagraph 7.5.2.4.

The Applicant believes that a lyocell cord having a response of at least about 120 N at an elongation of about 2% may be assembled in a semifinished product (belt layer) so as to obtain an excellent belting effect thanks to the elastic response of the cord itself.

The Applicant believes that an elastic response lower than about 200 N at an elongation of about 2% is to be preferred for avoiding that an excessive stiffness of the cord may cause a reduction of the fatigue strength of the semifinished product (belt layer), with a resulting decrease in the mileage achievable by the tyre comprising said semifinished product. Advantageously, lyocell is a cheap material, which ensures a less critical processing compared to aramid.

The cords are formed by at least two yarns or ends twisted together.

Preferably, said cords are formed by a number of yarns or ends twisted together not greater than 4.

Preferably, said cords have a total linear density greater than about 2000 dtex.

Preferably, said cords have a total linear density greater than about 3000 dtex.

Preferably, said cords have a total linear density greater than about 4500 dtex.

Preferably, said cords have a total linear density smaller than about 8000 dtex.

Preferably, the number of twists given to each yarn or end is greater than about 15 twists/dm.

Preferably, the number of twists given to each yarn or end is smaller than about 40 twists/dm.

Preferably, the number of twists given to the ends twisted together is greater than about 15 twists/dm.

Preferably, the number of twists given to ends twisted together is smaller than about 40 twists/dm.

Preferably, the number of twists given to each yarn is equal to the number of twists given to the yarns or ends twisted together.

Preferably, said at least one belt layer comprises cords with a density F equal to or smaller than about 100 cords/dm.

Preferably, said at least one belt layer comprises cords with a density F equal to or smaller than about 80 cords/dm.

Preferably, said at least one belt layer comprises cords with a density F equal to or greater than about 60 cords/dm.

By density F it is indicated the number of cords present per decimeter width in a section of semifinished product substantially perpendicular to the direction of the cords.

Preferably, said at least one belt layer comprises cords with a diameter smaller than about 1 mm.

Preferably, said at least one belt layer comprises cords with a diameter equal to or smaller than about 0.9 mm.

Preferably, said at least one belt layer comprises cords with a diameter equal to or smaller than about 0.7 mm.

Preferably, said at least one belt layer comprises cords with a diameter equal to or greater than about 0.5 mm.

By diameter of a cord it is meant the measure of the thickness of the cord drawn for example from a reel, preferably treated in advance with tackifiers, obtained by means of a centesimal comparator according to the ASTM D 751-06 regulation on cord segments laid on the plane of the comparator. Preferably, in each belt layer the cords form with the equatorial plane of the tyre an angle equal to or smaller than about 40° in absolute value measured at the equatorial plane of the finished tyre.

Preferably, in each belt layer the cords form with the equatorial plane of the tyre an angle equal to or greater than about 15° in absolute value measured at the equatorial plane of the finished tyre.

By lyocell cellulose fibre (or lyocell) it is meant a fibre as described for example in paper: Lyocell, The New Generation of Regenerated Cellulose, in Acta Polytechnica Hungarica, Vol. 5, No. 3, 2008 by Eva Borbély - Professor of Dept. of Packaging and Paper Technology, Budapest Tech - Doberdó út 6, H-1034 Budapest, Hungary.

By "tyre for motorcycles" it is meant a tyre having a high curvature ratio (typically greater than 0.20), which allows high camber angles to be reached when the motorcycle runs on a bend.

By "equatorial plane" of the tyre it is meant a plane perpendicular to the rotation axis of the tyre and dividing the tyre into two symmetrically equal portions.

By "circumferential" direction it is meant a direction generically directed according to the rotation direction of the tyre, or in any case only slightly inclined with respect to the rotation direction of the tyre.

By "curvature ratio" of the tyre it is meant the ratio between the distance of the radially highest point of the tread band from the maximum chord of the tyre (maximum width of the radial section), and the same maximum chord of the tyre, in a radial section of the tyre.

Referring to the angular arrangement of the cords and/or cord coils with respect to the equatorial plane of the tyre, such an angular arrangement is to be intended, in absolute value, for each point of the cord or cord coil, as referring to the angle between the equatorial plane of the tyre and the extension direction of the cord or coil.

Preferably, the tyre is intended to be fitted on the front wheel of a motorcycle. The tyre may have a maximum width of the radial section substantially between about 80 and about 140 mm, preferably between about 90 and 130 mm.

Preferably, the distance (f) of the radially outermost point of the tread from the line passing through the laterally opposite ends of the tread itself of said front tyre is substantially between about 45 and about 65 mm.

According to another aspect thereof, the present invention relates to a pair of tyres for motorcycles, comprising a front tyre and a rear tyre to be fitted respectively on a front wheel and a rear wheel of a two-wheeled vehicle. Preferably, in such a pair of tyres, the front tyre is made as described above. Preferably, the belt structure of the rear tyre comprises only one belt layer comprising at least one reinforcing cord wound on the carcass structure in adjacent coils oriented according to a substantially circumferential direction. Preferably, the coils of the at least one reinforcing element are arranged so as to form an angle smaller than about 10° in absolute value with respect to the equatorial plane.

Preferably, the reinforcing element of the belt layer of the rear tyre comprises at least one high elongation metal cord.

Alternatively, the reinforcing element of the belt layer of the rear tyre comprises at least one aramid fibre cord.

### BRIEF DESCRIPTION OF THE DRAWINGS

Further features and advantages of the tyre of the present invention will become more apparent from the following detailed description of some preferred embodiments thereof, made hereafter for indicating and non-limiting purposes with reference to the accompanying drawings, wherein:
- figure 1 shows load/elongation curves of some example of yarns or ends made of different fibres;
- figure 2 shows a radial section view of a tyre according to the invention;
- figure 3 shows a portion of the plan development of a portion of the belt structure of a first embodiment of a tyre according to the present invention;
- figure 4 shows a belt layer in a front section;

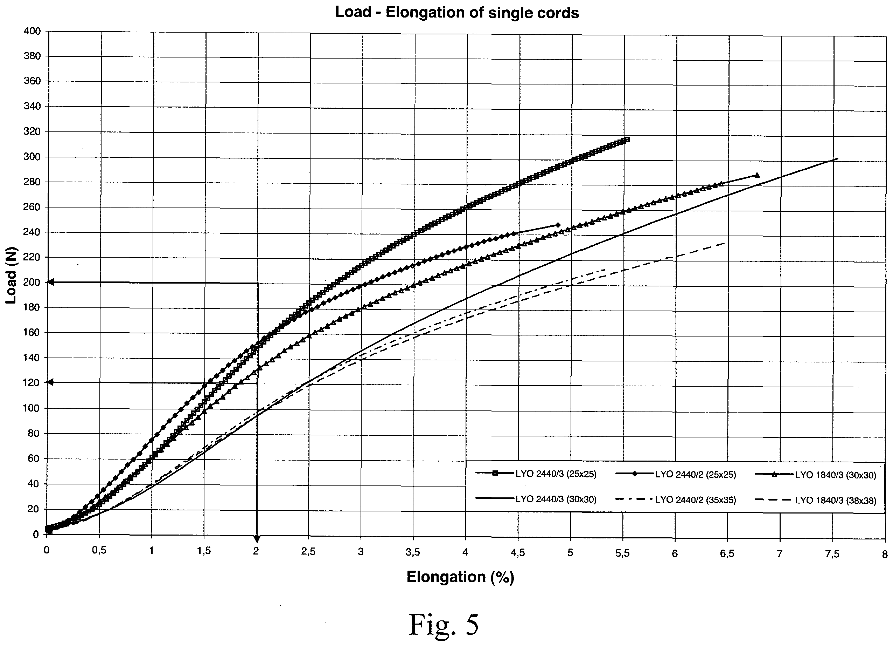

- figure 5 shows load/elongation curves for some examples of lyocell cords.

### DETAILED DESCRIPTION OF EMBODIMENTS OF THE INVENTION

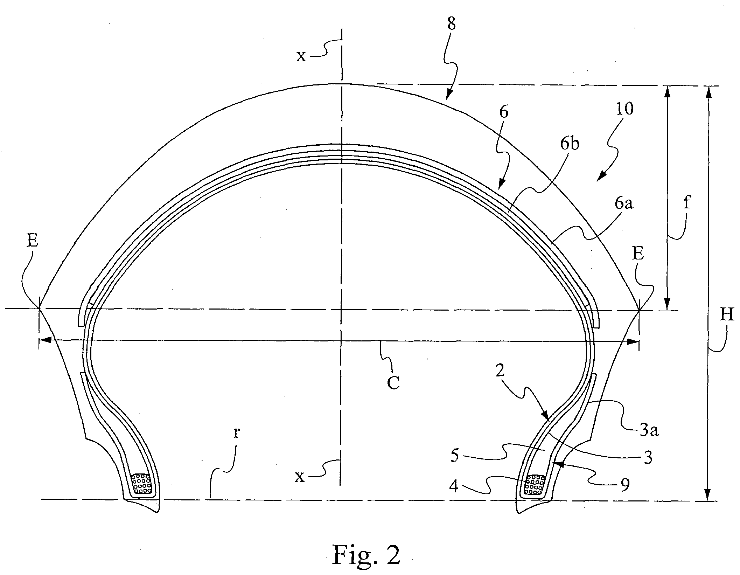

In figure 2, a front tyre of a pair of tyres adapted to be fitted on a motorcycle is indicated at 10. The pair of tyres preferably consists of a front tyre 10 having a so-called cross-belt structure, and a rear tyre (not shown) preferably having a belt structure at zero degrees.

In particular, tyre 10 is a high performance tyre which can be intended for fitting on a wheel of a motorcycle for road enduro or "big enduro" having medium-large engine capacity (e.g. 600-1200 cm³ or higher), and/or medium-high power (e.g. about 40 kW or higher). The present invention also refers to tyres intended to be fitted on wheels of "supersport" or "racing" motorcycles, i.e. motorcycles having large engine capacity (e.g. 600 cm³ or higher), and/or high power (e.g. 90-100 kW or higher), also used on tracks.

By high performance tyres for motorcycle wheels are meant tyres which are able to reach maximum speeds of at least about 210 km/h or to bear maximum loads of at least about 210 kg or to withstand a combination of both conditions.

An equatorial plane X-X and a rotation axis (not shown in the figure) are defined in tyre 10. Furthermore, a circumferential direction, arranged according to the rotation direction of the tyre, and an axial direction, perpendicular to the equatorial plane X-X, are defined.

Referring to figure 2, the front tyre 10 comprises a carcass structure 2 formed by at least one carcass layer 3 comprising a plurality of reinforcing elements (cords).

The reinforcing elements, included in the carcass layer 3, preferably comprise textile cords, selected from those usually adopted in the manufacture of carcasses for tyres, for example nylon, rayon, aramid, PET, PEN, lyocell cords, with an elementary thread having a diameter between 0.35 mm and 1.5 mm. The reinforcing elements included in the carcass layer 3 are preferably arranged in radial direction, i.e. according to an angle between 70° and 110°, more preferably between 80° and 100°, with respect to the equatorial plane X-X.

The carcass structure 2 is shaped according a substantially toroidal configuration and engages, by means of its opposite circumferential edges, at least one annular reinforcing structure 9, so as to form a structure usually identified with the name of "bead".

In particular, the opposite lateral edges 3a of the at least one carcass layer 3 may be turned up about annular reinforcing structures 9, each comprising one or more annular metal bead rings 4 and a tapered elastomeric filling 5 taking up the space defined between the carcass layer 3 and the respective turned up lateral edge 3a of the carcass layer 3.

The tyre region comprising the bead ring 4 and the filling 5 forms the so-called bead, intended for anchoring the tyre to a respective fitting rim, not shown.

In an alternative embodiment, not shown, the carcass layer has its opposite lateral edges associated, without a turn-up, with special annular reinforcing structures provided with two annular inserts. A filling of elastomeric material may be located in an axially outer position with respect to the first annular insert. The second annular insert is instead located in an axially outer position with respect to the end of the carcass layer. Finally, in an axially outer position with respect to said second annular insert, and not necessarily in contact with the same, a further filling can be provided which terminates the formation of the annular reinforcing structure.

A belt structure 6 is circumferentially applied, in a radially outer position, onto the carcass structure. A tread band 8 is circumferentially superimposed on the belt structure 6. Longitudinal and/or transverse grooves, arranged so as to define a desired tread pattern, are typically formed on the tread band 8 further to a moulding operation carried out at the same time with the vulcanization of the tyre.

Preferably, both the reinforcing elements included in the carcass structure 2 and those included in the belt structure 6 comprise lyocell cords.

The front tyre 10 may comprise a pair of sidewalls laterally applied on axially opposite sides to said carcass structure 2.

The front tyre 10 has a cross section characterised by a high transverse curvature.

In particular, the front tyre 10 has a section height H measured, at the equatorial plane, between the top of the tread band and the fitting diameter, identified by reference line r, passing through the tyre beads.

The front tyre 10 further has a width C defined by the distance between the laterally opposite ends E of the tread itself, and a curvature defined by the specific value of the ratio between the distance f of the top of the tread from the line passing through the ends E of the tread itself, measured at the equatorial plane of the tyre, and the aforesaid width C. The ends E of the tread may be formed by a corner.

In the present description and in the subsequent claims, by high curvature tyres are meant tyres having a curvature ratio f/C of at least about 0.2, preferably f/C ≥ about 0.28, for example equal to about 0.40. Preferably, such curvature ratio f/C is not greater than 0.8, more preferably f/C ≤ about 0.5. Preferably, the tyres have particularly low sidewalls. In other words, by tyres with low or lowered sidewalls are meant tyres in which the sidewall height ratio (H-f)/H is smaller than 0.7, more preferably smaller than about 0.65, for example equal to 0.6 for the rear tyre and to 0.5 for the front tyre.

The carcass structure 2 is typically lined on its inner walls with a sealing layer, or so-called "liner", essentially consisting of a layer of an airtight elastomeric material, adapted to ensure the tight seal of the tyre itself after it has been inflated.

Preferably, as shown in figures 1 and 2, the belt structure 6 consists of at least two radially superimposed layers 6a, 6b.

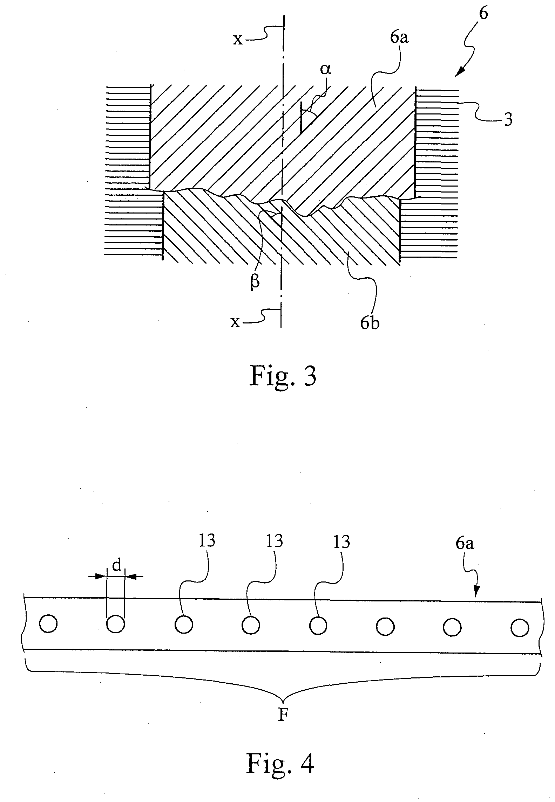

Referring to figure 3, each layer of the belt structure comprises elastomeric material reinforced with cords 13 made of lyocell and arranged parallel to one another. The layers are arranged so that the cords of the first belt layer 6a have an oblique orientation with respect to the equatorial plane X-X of the tyre, whereas the cords of the second layer also have an oblique orientation, but substantially symmetrically crossed with respect to the cords of the first layer 6a.

The cords of the first layer are arranged so as to form, in the finished tyre, an angle α between the equatorial plane of the tyre and their extension direction, wherein, at the equatorial plane, α ≥ about 15°, preferably α ≤ about 40°.

The cords of the second layer are arranged so as to form an angle β between the equatorial plane of the tyre and their extension direction, wherein said angle has, in proximity of the equatorial plane, a value typically substantially equal to the value of α, but is substantially symmetrical thereto with respect to the equatorial plane.

Preferably, the first layer and the second layer of the belt structure have an axial extension different from each another.

Preferably, the radially outermost belt layer has a greater axial extension than the radially innermost belt layer.

Preferably, the layers of the belt structure 6 extend substantially at least on part of the crown portion of the tyre.

The belt layers or semifinished products may be made by incorporating a plurality of cords into an elastomeric matrix.

The linear density or linear density of the yarns can be expressed in decitex (dtex), i.e. as the mass expressed in grams of a thread or thread-like reinforcing element having a length of 10000 m.

For example:
LYO 2440/2 (25x25) identifies a cord formed by two lyocell fibre yarns or ends, each yarn or end having a linear density of 2440 dtex (total linear density of the cord equal to 4880 dtex). By "total linear density" of a cord it is meant the sum of the linear densities of the individual yarns or ends twisted together to form the cord.

Each end is twisted on itself with 25 twists per decimeter, corresponding to 250 twists per meter (TPM). The two yarns or ends are twisted together (preferably in opposite direction) with 25 twists per decimeter to form a cord. Preferably, each lyocell yarn or end has a linear density greater than about 900 dtex.

Preferably, each lyocell yarn or end has a linear density smaller than about 2500 dtex.

The twists given to the individual yarns paired or coupled together may be in the same direction or in opposite direction with respect to the twists imparted to the individual yarns.

Preferably, for making the cords, yarns with different linear densities may be selected to form a yarn which is than twisted alone or together with other yarns.

According to this approach, for example, it is possible to make a yarn by twisting together two lyocell yarns of 1220 dtex and 1400 dtex, respectively, thus obtaining a yarn with a total linear density of 2620 dtex.

Examples of total linear densities used for making the cords of the cross-belt layer are:
- 2160 dtex in form of lyocell 1220/940 dtex
- 2620 dtex in form of lyocell 1220/1400 dtex
- 2780 dtex in form of lyocell 1840/940 dtex
- 3240 dtex in form of lyocell 1840/1400 dtex
- 3840 dtex in form of lyocell 2440/1400 dtex
- 4320 dtex in form of lyocell 2440/1880 dtex
- 3380 dtex in form of lyocell 1220/1220/940 dtex
- 3840 dtex in form of lyocell 1220/1220/1400 dtex
- 5080 dtex in form of lyocell 1840/1840/1400 dtex
- 5560 dtex in form of lyocell 1840/1840/1880 dtex
- 6280 dtex in form of lyocell 2440/2440/1400 dtex

Preferably, cords manufactured by twisted pairing or coupling of yarns with different linear densities have a total linear density greater than or equal to about 2000 dtex.

More preferably, said cords have a total linear density greater than about 3000 dtex. Even more preferably, said cords have a total linear density greater than about 4500 dtex.

Preferably, cords manufactured by twisted pairing or coupling of yarns with different linear densities have a total linear density smaller than or equal to about 8000 dtex.

The Applicant performed traction tests on yarns according to the testing methods defined by BISFA (Bureau International pour la Standardisation des Fibres Artificielles) - Testing methods for viscose, cupro, acetate, triacetate and lyocell filament yarns - 2007 Edition, Determination of tensile properties - Chapter 7.

The behaviour of the load (N) - elongation (%) curves of examples of some lyocell cords is shown in figure 4. Among them, some examples of cords which can be used for manufacturing belt layers are those indicated in figure 4 as LYO 1840 /3(30x30), LYO 2440/2(25x25) and 2440/3(25x25).

Such cords respectively have linear density (of each individual yarn or end) 1840 dtex, 3 yarns or ends (total linear density 5520 dtex), 30 twists per yarn or end and 30 twists in opposite direction of the yarns or ends twisted together, elastic response of about 132 N at about 2% elongation; linear density (of each individual yarn or end) 2440 dtex, 2 yarns or ends (total linear density 4880 dtex), 25 twists per yarn or end and 25 twists in opposite direction of the yarns or ends twisted together, elastic response of about 148 N at about 2% elongation; linear density (of each individual yarn or end) 2440 dtex, 3 yarns or ends (total linear density 7320 dtex), 25 twists per yarn or end and 25 twists in opposite direction of the yarns or ends twisted together, elastic response of about 153 N at about 2% elongation.

Other lyocell cords of which the load/elongation curve is reported are LYO 2440/3(30x30); LYO 2440/3(35x35); LYO 1840/3 (38x38). None of them appear to be suitable for making belt layers for the tyre according to the invention, since the elastic response of each of these cords at a strain of about 2% is smaller than 120 N. The semifinished product made with said cords does not allow an effective belting effect and good driving performance to be achieved.

### EXAMPLE

Front tyres for a road enduro motorcycle with size 110/80 R19, speed symbol V (maximum speed 240 km/h), load index 59 (maximum sustainable load 243 kg), including a cross-belt structure, were prepared. In the test tyres the reinforcing cords of the cross-belt structure were made of lyocell with the following structural features: linear density (of each yarn or end) 2440 dtex, number of yarns or ends 2 (total linear density 4880), number of twists per decimeter respectively for each yarn or end and for the two yarns or ends twisted together 25x25. The cords had a diameter d = 0.66 mm and were incorporated in the belt layer with a density F = 80 cords/dm. The cords of the two belt layers were arranged so as to form, in the finished tyre, angles between the equatorial plane of the tyre and their extension direction at the equatorial plane of about 31° in absolute value.

The tyres so prepared were fitted frontally on a BMW R 1200 GS motorcycle provided with rear tyres without cross-belt and with a belt at zero degrees, and tested on a motor racing circuit. The results obtained are shown in Table 1. For assessing the tyre behaviour, the test driver simulated some characteristic manoeuvres (e.g. acceleration, change of lane, entering a bend, leaving a bend). Afterwards, the test driver assessed the tyre behaviour and gave a score depending on the tyre performance during each manoeuvre. The test driver assessed different behaviours that are particularly significant for the performance of the front tyre, such as, for example, stability in different conditions, driving precision, and handling.

Table 1 summarizes the score sheet of the test driver for tyre controllability. The results of these tests are expressed by means of an assessment scale representing the subjective judgment expressed by the test driver by means of a score system. The assessment scale ranges from a minimum of 1 to a maximum of 5.

**Table 1**

| TEST TYRE | |
|---|---|
| Shimmy (1) with cold tyre | 4,00 |
| Shimmy (1) with warm tyre | 4,00 |
| Stability while accelerating on straight path | 3,25 |
| Auto-induced stability on a straight path | |
| @ 140 km/h | 4,00 |
| @ 160 km/h | 3,80 |
| @ 180 km/h | 3,20 |
| @ 200 km/h | 3,00 |
| Pudding (2) | 3,80 |
| Comfort | 4,00 |
| Handling | 4,00 |

| | |
|---|---|
| (1): anomalous vibration of the handlebars (2): perception of compactness and solidity of the tyre | |

The results reported in Table 1 show that a belt layer including lyocell cords arranged as explained above allows a belting effect to be achieved thus attaining good driving performance. In particular, this effect is highlighted by the test of auto-induced stability on a straight path.

The given score, despite a decrease, as it is typical, maintains a positive value (score 3) at 200 km/h.

The present invention has been described with reference to some embodiments thereof. Many modifications can be made in the embodiments described in detail, still remaining within the scope of protection of the invention, defined by the following claims.

## Claims

1. Tyre (10) for motorcycles comprising:
a carcass structure (2);
a belt structure (5) applied in a radially outer position with respect to the carcass structure (2);
a tread band (8) applied in a radially outer position with respect to the belt structure (5);
said tyre (10) having a transverse curvature ratio (f/C) of at least about 0.20,
wherein said belt structure comprises at least one belt layer comprising a plurality of reinforcing cords arranged substantially parallel to one another and
inclined with respect to the equatorial plane of the tyre, said reinforcing cords being made of lyocell yarns or ends, said tyre being **characterized in that** said cords having, in a load/elongation diagram, a response of at least about 120 N at an elongation of about 2%.

2. Tyre (10) for motorcycles according to claim 1, wherein said cords have, in load/elongation diagram, a response not greater than about 200 N at an elongation of about 2%.

3. Tyre (10) for motorcycles according to any one of claims 1 or 2, wherein said cords made of lyocell are formed by at least two ends twisted together.

4. Tyre (10) according to any one of claims 1 to 3, wherein said cords are formed by a number of yarns or ends twisted together not greater than 4.

5. Tyre (10) for motorcycles according to any one of claims 1 to 4, wherein said cords have a total linear density greater than about 2000 dtex.

6. Tyre (10) according to any one of claims 1 to 5, wherein said cords have a total linear density greater than about 3000 dtex.

7. Tyre (10) according to any one of claims 1 to 6, wherein said cords have a total linear density smaller than about 8000 dtex.

8. Tyre (10) according to any one of claims 1 to 7, wherein the number of twists given to each yarn or end is greater than 15 twists/dm.

9. Tyre (10) according to any one of claims 1 to 8, wherein the number of twists given to each yarn or end is smaller than 40 twists/dm.

10. Tyre (10) according to any one of claims 1 to 9, wherein the number of twists given to each yarn or end is equal to the number of twists given to the yarns or ends twisted together.

11. Tyre (10) according to any one of claims 1 to 10, wherein each belt layer comprises cords with a density (F) equal to or smaller than about 100 cords/dm.

12. Tyre (10) according to any one of claims 1 to 11, wherein each belt layer comprises cords with a density (F) equal to or greater than about 60 cords/dm.

13. Tyre (10) according to any one of claims 1 to 12, wherein each belt layer comprises cords with a diameter smaller than about 1 mm.

14. Tyre (10) according to any one of claims 1 to 13, wherein each belt layer comprises cords with a diameter equal to or greater than about 0.5 mm.

15. Tyre (10) for motorcycles according to any one of claims 1 to 14, wherein said belt structure (5) comprises at least two radially superimposed belt layers, the cords of both layers being arranged so as to form an angle greater than or equal to about 15° with respect to the equatorial plane of the tyre.

16. Tyre (10) for motorcycles according to any one of claims 1 to 15, wherein the cords of both layers are arranged so as to form an angle smaller than or equal to about 40° with respect to the equatorial plane of the tyre.

17. Tyre (10) for motorcycles according to any one claims 1 to 16, wherein said tyre is intended to be fitted on the front wheel of a motorcycle.

18. Tyre (10) for motorcycles according to any one of claims 1 to 17, wherein said tyre has a radial section width substantially between about 80 and about 140 mm.

## Patentansprüche

1. Reifen (10) für Motorräder, umfassend:
eine Karkassenstruktur (2);
eine Gürtelstruktur (5), die in Bezug auf die Karkassenstruktur (2) in einer radial äußeren Position angelegt ist;
einen Laufflächenring (8), der in Bezug auf die Gürtelstruktur (5) in einer radial äußeren Position aufgebracht ist;
wobei der Reifen (10) ein Querwölbungsverhältnis (f/C) von zumindest etwa 0,20 aufweist, wobei die Gürtelstruktur zumindest eine Gürtellage umfassend eine Vielzahl von Verstärkungskorden, die im Wesentlichen parallel zueinander angeordnet und in Bezug auf die Äquatorialebene des Reifens geneigt sind, umfasst, wobei die Verstärkungskorde aus Lyocell-Garnen oder - Enden hergestellt sind, wobei der Reifen **dadurch gekennzeichnet ist, dass**
die Korde im Spannungs-Dehnungs-Diagramm eine Reaktion von zumindest etwa 120 N bei einer Dehnung von etwa 2 % aufweisen.

2. Reifen (10) für Motorräder nach Anspruch 1, wobei die Korde im Spannungs-Dehnungs-Diagramm eine Reaktion von nicht mehr als etwa 200 N bei einer Dehnung von etwa 2 % aufweisen.

3. Reifen (10) für Motorräder nach einem der Ansprüche 1 oder 2, wobei die aus Lyocell hergestellten Korde aus zumindest zwei miteinander verdrillten Enden gebildet werden.

4. Reifen (10) nach einem der Ansprüche 1 bis 3, wobei die Korde aus einer Anzahl von nicht mehr als 4 miteinander verdrillten Garnen oder Enden gebildet werden.

5. Reifen (10) für Motorräder nach einem der Ansprüche 1 bis 4, wobei die Korde eine gesamte lineare Dichte von mehr als etwa 2000 dtex aufweisen.

6. Reifen (10) für Motorräder nach einem der Ansprüche 1 bis 5, wobei die Korde eine gesamte lineare Dichte von mehr als etwa 3000 dtex aufweisen.

7. Reifen (10) für Motorräder nach einem der Ansprüche 1 bis 6, wobei die Korde eine gesamte lineare Dichte von weniger als etwa 8000 dtex aufweisen.

8. Reifen (10) nach einem der Ansprüche 1 bis 7, wobei die Anzahl der Windungen, die jedem Garn oder Ende verliehen wird, größer als 15 Windungen/dm ist.

9. Reifen (10) nach einem der Ansprüche 1 bis 8, wobei die Anzahl der Windungen, die jedem Garn oder Ende verliehen wird, kleiner als 40 Windungen/dm ist.

10. Reifen (10) nach einem der Ansprüche 1 bis 9, wobei die Anzahl der Windungen, die jedem Garn oder Ende verliehen wird, gleich der Anzahl der Windungen ist, mit der die miteinander verdrillten Garne oder Enden verdrillt sind.

11. Reifen (10) nach einem der Ansprüche 1 bis 10, wobei jede Gürtellage Korde mit einer Dichte (F) gleich oder kleiner etwa 100 Korde/dm umfasst.

12. Reifen (10) nach einem der Ansprüche 1 bis 11, wobei jede Gürtellage Korde mit einer Dichte (F) gleich oder größer etwa 60 Korde/dm umfasst.

13. Reifen (10) nach einem der Ansprüche 1 bis 12, wobei jede Gürtellage Korde mit einem Durchmesser kleiner als etwa 1 mm umfasst.

14. Reifen (10) nach einem der Ansprüche 1 bis 13, wobei jede Gürtellage Korde mit einem Durchmesser gleich oder größer als etwa 0,5 mm umfasst.

15. Reifen (10) für Motorräder nach einem der Ansprüche 1 bis 14, wobei die Gürtelstruktur (S) zumindest zwei radial überlagerte Gürtellagen umfasst, wobei die Korde beider Lagen so angeordnet sind, dass sie einen Winkel von mehr als oder gleich etwa 15° in Bezug auf die Äquatorialebene des Reifens bilden.

16. Reifen (10) für Motorräder nach einem der Ansprüche 1 bis 15, wobei die Korde beider Lagen so angeordnet sind, dass sie einen Winkel von weniger als oder gleich etwa 40° in Bezug auf die Äquatorialebene des Reifens bilden.

17. Reifen (10) für Motorräder nach einem der Ansprüche 1 bis 16, wobei der Reifen zur Montage an dem Vorderrad eines Motorrads vorgesehen ist.

18. Reifen (10) für Motorräder nach einem der Ansprüche 1 bis 17, wobei der Reifen eine radiale Querschnittsbreite im Wesentlichen zwischen etwa 80 und etwa 140 mm aufweist.

## Revendications

1. Pneu (10) pour motocycles comprenant :
une structure de carcasse (2) ;
une structure de ceinture (5) appliquée dans une position radialement extérieure par rapport à la structure de carcasse (2) ;
une bande de roulement (8) appliquée dans une position radialement extérieure par rapport à la structure de ceinture (5) ;
ledit pneu (10) ayant un rapport de courbure transversale (f/C) d'au moins environ 0,20,
dans lequel ladite structure de ceinture comprend au moins une couche de ceinture comprenant une pluralité de câblés de renforcement agencés essentiellement parallèlement les uns aux autres et inclinés par rapport au plan équatorial du pneu, lesdits câblés de renforcement étant réalisés en extrémités ou fils lyocell ledit pneu étant **caractérisé en ce que**,
lesdits câblés ont, dans un diagramme de charge/d'allongement, une réponse d'au moins environ 120 N à un allongement d'environ 2%.

2. Pneu (10) pour motocycles selon la revendication 1, dans lequel lesdits câblés ont, dans un diagramme de charge/d'allongement, une réponse inférieure ou égale à environ 200 N pour un allongement d'environ 2%.

3. Pneu (10) pour motocycles selon l'une quelconque des revendications 1 et 2, dans lequel lesdits câblés réalisés en lyocell sont formés par au moins deux extrémités torsadées ensemble.

4. Pneu (10) selon l'une quelconque des revendications 1 à 3, dans lequel lesdits câblés sont formés par un nombre de fils ou d'extrémités torsadé(e)s ensemble inférieur ou égal à 4.

5. Pneu (10) pour motocycles selon l'une quelconque des revendications 1 à 4, dans lequel lesdits câblés ont une densité linéaire totale supérieure à environ 2000 dtex.

6. Pneu (10) selon l'une quelconque des revendications 1 à 5, dans lequel lesdits câblés ont une densité linéaire totale supérieure à environ 3000 dtex.

7. Pneu (10) selon l'une quelconque des revendications 1 à 6, dans lequel lesdits câblés ont une densité linéaire totale inférieure à environ 8000 dtex.

8. Pneu (10) selon l'une quelconque des revendications 1 à 7, dans lequel le nombre de torsions donné à chaque fil ou extrémité est supérieur à 15 torsions/dm.

9. Pneu (10) selon l'une quelconque des revendications 1 à 8, dans lequel le nombre de torsions donné à chaque fil ou extrémité est inférieur à 40 torsions/dm.

10. Pneu (10) selon l'une quelconque des revendications 1 à 9, dans lequel le nombre de torsions donné à chaque fil ou extrémité est égal au nombre de torsions donné aux fils ou aux extrémités torsadé(e)s ensemble.

11. Pneu (10) selon l'une quelconque des revendications 1 à 10, dans lequel chaque couche de ceinture comprend des câblés ayant une densité (F) inférieure ou égale à environ 100 câblés/dm.

12. Pneu (10) selon l'une quelconque des revendications 1 à 11, dans lequel chaque couche de ceinture comprend des câbles ayant une densité (F) supérieure ou égale à environ 60 câblés/dm.

13. Pneu (10) selon l'une quelconque des revendications 1 à 12, dans lequel chaque couche de ceinture comprend des câblés ayant un diamètre inférieur à environ 1 mm.

14. Pneu (10) selon l'une quelconque des revendications 1 à 13, dans lequel chaque couche de ceinture comprend des câbles ayant un diamètre supérieur ou égal à environ 0,5 mm.

15. Pneu (10) pour motocycles selon l'une quelconque des revendications 1 à 14, dans lequel ladite structure de ceinture (5) comprend au moins deux couches de ceinture superposées radialement, les câblés des deux couches étant agencés de manière à former un angle supérieur ou égal à environ 15° par rapport au plan équatorial du pneu.

16. Pneu (10) pour motocycles selon l'une quelconque des revendications 1 à 15, dans lequel les câblés des deux couches sont agencés de manière à former un angle inférieur ou égal à environ 40° par rapport au plan équatorial du pneu.

17. Pneu (10) pour motocycles selon l'une quelconque des revendications 1 à 16, dans lequel ledit pneu est destiné à être monté sur la roue avant d'un motocycle.

18. Pneu (10) pour motocycles selon l'une quelconque des revendications 1 à 17, dans lequel ledit pneu a une largeur de section radiale sensiblement comprise entre environ 80 et environ 140 mm.
